(19) Europäisches Patentamt
European Patent Office
Office européen des brevets

(11) **EP 2 196 821 A1**

(12) **DEMANDE DE BREVET EUROPEEN**

(43) Date de publication:
**16.06.2010 Bulletin 2010/24**

(51) Int Cl.:
***G01S 13/538*** *(2006.01)*  ***G01S 7/41*** *(2006.01)*
***G01S 13/72*** *(2006.01)*

(21) Numéro de dépôt: **09176504.0**

(22) Date de dépôt: **19.11.2009**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA RS**

(30) Priorité: **02.12.2008 FR 0806765**

(71) Demandeur: **Thales**
**92200 Neuilly Sur Seine (FR)**

(72) Inventeurs:
• **Reuillon, Philippe**
**75014 Paris (FR)**

• **Groenenboom, Albert**
**5165 AT Waspik (NL)**
• **Moruzzis, Michel**
**91290 La Norville (FR)**

(74) Mandataire: **Lucas, Laurent Jacques**
**Marks & Clerk France**
**Conseils en Propriété Industrielle**
**Immeuble " Visium "**
**22, avenue Aristide Briand**
**94117 Arcueil Cedex (FR)**

(54) **Procédé de filtrage cinématique temporel multidimensionel de plots radar, de tour d'antenne à tour d'antenne**

(57) L'invention se rapporte au domaine général de la détection, notamment de la détection radar de cibles mobiles ou fixes. Elle consiste en un procédé permettant principalement de qualifier les plots fournis par la chaine de traitement du système de détection avant que ceux-ci soient exploités pour élaborer des pistes, chaque piste étant censée représenter la trajectoire d'un objet en mouvement qui a été détecté. Selon l'invention on considère une durée d'analyse et on considère ensemble les plots détectés durant cette période. Ces plots sont répartis en sous-ensembles, chaque sous-ensemble correspondant aux plots qui durant la durée d'analyse ont été détectés dans un même canal d'analyse défini par une position initiale et un vecteur vitesse. Les sous-ensembles ainsi formés sont ensuite regroupés, un même groupe réunissant les sous-ensembles comportant des plots dont l'assertion conjointe d'une pluralité d'attributs, est vérifiée.

Fig. 1

**Description**

L'invention se rapporte au domaine général de la détection, notamment de la détection radar de cibles mobiles ou fixes. Elle traite plus particulièrement du problème de la détection de cibles de petite dimension évoluant dans un environnement bruité.

En ce qui concerne la détection radar de cibles de petite taille dans un environnement électromagnétique perturbé par du fouillis, du fouillis de mer par exemple, l'un des principaux problèmes à résoudre pour optimiser la détection (et par suite le pistage) des cibles consiste à trouver un moyen pour réduire le taux de fausse alarme en séparant convenablement les signaux correspondants à des cibles des signaux constituant le fouillis ambiant, la fluctuation du signal correspondant au fouillis engendrant de manière connue des fausses alarmes. Pour résoudre ce problème il est généralement nécessaire de tirer du signal reçu la quantité d'information la plus grande possible. Or, l'exploitation simple des signaux reçus sur un tour d'antenne ne permet parfois pas de distinguer clairement si le signal reçu correspond au signal réfléchi par une cible de petite taille ou bien si ce signal correspond à une manifestation particulière du fouillis, le signal produit par une vague qui se brise par exemple. Il est par conséquent parfois nécessaire d'utiliser les informations reçues d'un tour d'antenne à l'autre afin de pouvoir opérer la distinction.

Par suite, les informations jugées significatives extraites des signaux reçus de tour à tour doivent être corrélées en tenant compte que d'un tour d'antenne à l'autre le signal réfléchi par une cible réelle subit des variations liées à la cinématique de cette cible. On est donc contraint d'appliquer un filtrage cinématique temporel, à trois dimensions, au signal reçu, sachant qu'une cible est susceptible de se déplacer dans les trois dimensions de l'espace. On entend ici par information significative, toute information extraite d'un signal ayant répondu aux critères de détection.

Une méthode connue pour réaliser ce filtrage cinématique temporel tridimensionnel, de tour à tour, est de constituer des chaînes de détections, chaque chaîne de détections étant constituée par l'ensemble des plots associés pour former une même piste caractérisant le mouvement d'un seul et même objet ou cible. Ce filtrage est généralement réalisé par le système de pistage pour lequel chaque information de détection transmise est considérée comme représentant une cible potentielle. Une telle approche nécessite cependant l'utilisation d'algorithmes de création et d'entretien des chaînes de détections, dont la mise en oeuvre requiert des temps de calcul dont les durées sont généralement des fonctions non linéaires du nombre de détections traitées, fonctions dont les dérivées sont elles-mêmes des fonctions croissantes. Chaque piste se traduisant par l'entretien des chaînes de détections correspondantes, on est par conséquent contraint, pour des raisons de charge de calcul, de limiter le nombre de chaînes de détections traitées par le pistage.

Un but de l'invention est de proposer une méthode de filtrage cinématique temporel multidimensionnel, alternative à la méthode connue évoquée précédemment, qui soit moins coûteuse en temps de calcul. Un autre but de l'invention est de permettre ainsi le tri des cibles potentielles et le pistage d'un plus grand nombre de cibles réelles.

A cet effet l'invention a pour objet un procédé de filtrage cinématique temporel multidimensionnel de plots, appliqué aux plots détectés pendant une durée d'analyse correspondant à une pluralité de tours d'antenne. Le filtrage est ici réalisé au moyen de canaux d'analyse, chaque canal d'analyse définissant le mouvement d'un modèle de cible depuis une position initiale correspondant au début de la durée d'analyse. La position du modèle de cible pour un tour d'antenne donné est affectée d'un intervalle d'incertitude. Le procédé selon l'invention est caractérisé par les étapes suivantes:

- une première étape de mémorisation des plots détectés de tour d'antenne à tour d'antenne, la mémorisation des plots détectés étant réalisée sur un nombre de tours N donné correspondant à la durée d'analyse;
- une deuxième étape de regroupement des plots mémorisés en sous-ensembles, un sous-ensemble étant constitué par les plots localisés dans un même canal d'analyse;
- une troisième étape de classement des différents sous-ensembles en une pluralité de groupes, chaque groupe correspondant aux sous-ensembles comportant des plots pour lesquels l'assertion conjointe d'une pluralité d'attributs, la valeur de chaque attribut étant intégrée sur la durée d'analyse, est vérifiée;
- une quatrième étape de qualification des plots mémorisés, le critère de qualification d'un plot donné étant défini par l'appartenance du plot à l'un ou l'autre des groupes;
- une cinquième étape de transmission sélective des plots qualifiés, les conditions de transmission d'un plot étant fonction de la qualification de ce plot.

Selon un mode de mise en oeuvre de l'invention, la troisième étape consiste à classer les différents sous-ensembles en plusieurs groupes, chaque groupe correspondant aux sous-ensembles comportant un nombre n de plots, n étant inférieur à un nombre P donné et différent d'un groupe à l'autre; la quatrième étape de qualification des plots mémorisés, consistant à qualifier chaque plot par un attribut caractérisant l'appartenance du plot aux sous-ensembles des différents groupes;

Selon ce mode de mise en oeuvre de l'invention, la quatrième étape de qualification des plots peut consister à affecter un attribut à chaque plot mémorisé, attribut dont la valeur indique le groupe rassemblant les sous-ensembles, auxquels le plot appartient, qui comportent le nombre de plots le plus élevé

Selon un autre mode de mise en oeuvre de l'invention, la troisième étape consiste à classer les différents sous-ensembles en deux groupes, un premier groupe correspondant aux sous-ensembles comportant un nombre n de plots inférieur à un nombre P donné et un second groupe correspondant aux sous-ensembles comportant un nombre de plots supérieur ou égal à P.; La quatrième étape de qualification des plots mémorisés, consiste alors à qualifier chaque plot par un attribut binaire dont la valeur caractérise son appartenance à un sous-ensemble de l'un ou l'autre groupe.

Selon ce mode de mise en oeuvre de l'invention, la quatrième étape de qualification des plots peut consister à affecter un attribut binaire à chaque plot mémorisé, attribut dont une valeur indique que le plot appartient à au moins un sous-ensemble classé dans le second groupe et dont l'autre valeur indique n'appartient à aucun sous-ensemble classé dans ce second groupe.

Selon ce mode de mise en oeuvre de l'invention, la cinquième étape de transmission des plots au pistage peut consister à transmettre seulement les plots dont les attributs binaires indiquent que ces plots appartiennent à au moins un sous-ensemble classé dans le second groupe; les autres plots n'étant pas transmis.

Selon ce mode de mise en oeuvre de l'invention, la cinquième étape de transmission des plots au pistage peut alternativement consister à transmettre l'ensemble des plots mémorisés chaque plot étant transmis avec son attribut binaire.

Selon un autre mode de mise en oeuvre de l'invention, chaque canal d'analyse utilisé au cours de la deuxième étape, est défini comme une zone de l'espace multidimensionnel (position, vitesse et temps), caractérisé par une position initiale et un vecteur vitesse initial, et délimité à chaque instant de mesure par un intervalle d'incertitude en position dont les dimensions sont fonction de la précision des mesures effectuées, selon chacun des axes de mesure.

Selon le mode de mise en oeuvre précédent de l'invention, les canaux d'analyse peuvent être déterminés en choisissant un ensemble de vecteurs vitesse et en considérant pour chaque vecteur vitesse un maillage initial de l'espace défini par une pluralité d'intervalles d'incertitude, chaque intervalle étant centré sur un point donné de cet espace, de façon à couvrir la totalité de cet espace.

Selon ce mode de mise en oeuvre les vecteurs vitesse peuvent être choisis avec une amplitude et une direction constante d'un instant de mesure à l'autre, chaque canal d'analyse ainsi défini caractérisant le mouvement rectiligne uniforme d'un modèle de cible depuis une position initiale.

Selon ce mode de mise en oeuvre précédent les positions sur lesquelles sont centrés les différents intervalles d'incertitude peuvent être définies de façon à ce que chaque intervalle soit recouvert sur une moitié de sa surface par chacun des intervalles voisins.

Selon un autre mode de mise en oeuvre, la vitesse associée à chaque plot étant considérée comme exacte, l'intervalle d'incertitude délimitant un canal pour un instant de mesure donné, a des dimensions constantes.

Selon l'invention, l'espace multidimensionnel (position, vitesse, temps) peut-être défini par un axe des temps et un repère de coordonnées polaires ayant le radar pour origine, la position initiale étant alors définie par une distance radiale une position en gisement et une position en site et le vecteur vitesse par une composante radiale, une composante en gisement et une composante en site.

Selon l'invention, l'espace multidimensionnel (position, vitesse, temps) peut alternativement être défini par un axe des temps et un repère de coordonnées polaires ayant le radar pour origine, la position initiale étant alors définie par une distance radiale et une position en gisement et le vecteur vitesse par une composante radiale ou une composante en gisement.

Alternativement encore, l'espace multidimensionnel (position, vitesse, temps) peut, selon l'invention, être défini par un axe des temps et un repère de coordonnées cartésiennes à trois dimensions ayant le radar pour origine, la position initiale et les composantes du vecteur vitesse, étant exprimées dans ce repère.

Alternativement encore, l'espace multidimensionnel (position, vitesse, temps) peut être défini par un axe des temps et un repère de coordonnées cartésiennes à deux dimensions ayant le radar pour origine, la position initiale et les composantes du vecteur vitesse, étant exprimées dans ce repère.

Enfin dans un autre mode de mise en oeuvre de l'invention, la deuxième étape prend en compte la vitesse instantanée de chaque plot, un plot n'étant classé dans un canal d'analyse à un instant de mesure donné $t_i$ que si sa vitesse instantanée est comparable à celle définie pour le modèle de cible qui est matérialisé par le canal considéré.

Avantageusement, le procédé selon l'invention peut être facilement intercalé dans une chaîne de traitement standard en aval de la chaine de formation des plots radar et en amont de la chaîne de pistage.

Il peut également agir de manière avantageusement interactive avec la fonction de pistage et être configuré de façon à n'agir que lorsque le nombre de plots formés n'est pas compatible de la charge de calcul maximale admissible par la chaîne de pistage, de façon à effectuer une première sélection des plots que la chaîne de pistage doit traiter.

Les caractéristiques et avantages du procédé selon l'invention seront mieux comprises au travers de la description qui suit, description faite en regard des figures annexées qui représentent:

- la figure 1, un organigramme de principe du procédé selon l'invention;

- la figure 2, une représentation schématique d'un canal d'analyse multidimensionnel selon l'invention;
- la figure 3, une représentation schématique bidimensionnelle du principe de disposition des canaux d'analyse;
- la figure 4, une représentation schématique multidimensionnelle du principe de disposition des canaux d'analyse;
- la figure 5, une illustration schématique de la troisième étape du procédé selon l'invention, au travers d'un mode particulier de mise en oeuvre.

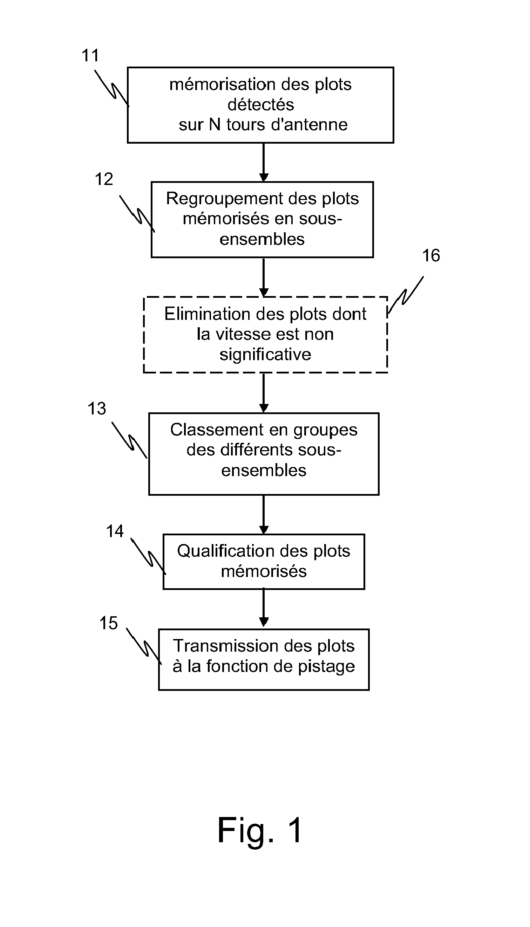

On s'intéresse dans un premier temps à la figure 1, qui présente les principales étapes du procédé selon l'invention. Ce procédé qui prend place entre la chaîne de traitement chargé de la constitution des plots radar et la chaîne de traitement en charge de la fonction de pistage. Le procédé est avantageusement applicable aux radars Doppler et non Doppler. Il est également applicable à d'autres systèmes de détection fonctionnant sur le même principe d'association des échos détectés, par exemple des systèmes LIDAR ou SONAR. On définit ici à cet effet un plot comme un objet correspondant à la détection à un instant donné d'un signal issu de la réflexion par une cible du signal émis par le système de détection considéré, un radar dans la suite de la description. Chaque plot est notamment caractérisé par la position en distance et en gisement de la cible à l'origine du plot, ainsi qu'éventuellement par la position en site et par la vitesse instantanée de cette cible.

Le procédé selon l'invention comporte principalement:

- une première étape 11 de mémorisation des plots détectés par le système de détection, un radar par exemple;
- une deuxième étape 12 de regroupement en sous-ensembles des plots mémorisés, un sous-ensemble contenant les plots situés à l'intérieur d'un même canal d'analyse;
- une troisième étape 13 de tri et de répartition des différents sous-ensembles formés à l'étape 12 en une pluralité de groupes;
- une quatrième étape 14 de classification des plots mémorisés, classification qui prend en compte la répartition réalisée à l'étape 13;
- une cinquième étape 15 de transmission des plots classifiés à la fonction de pistage.

La première étape 11 peut prendre différentes formes. Elle consiste cependant à effectuer de tour d'antenne à tour d'antenne et pour un nombre N donné de tours d'antenne, la mémorisation des plots détectés par la chaîne de traitement située en amont du procédé selon l'invention. On obtient ainsi pour chaque tour d'antenne une liste de plots détectés qui, contrairement à ce qui se produit généralement dans une chaîne de traitement radar, ne sont pas directement transmis à la fonction de pistage, mais plutôt stockés de façons à être exploités conjointement avec les plots mémorisés correspondant aux N-1 tours d'antennes qui sont associés au tour d'antenne considéré.

Selon l'invention, la profondeur de mémorisation, c'est-à-dire le nombre de tours d'antenne pour lesquels on effectue la mémorisation, est déterminée en fonction de paramètres opérationnels qui portent, en outre, sur les caractéristiques cinématiques attribuées aux éléments détectés. Dans une variante de mise en oeuvre simple, mais non limitative, le nombre de tour est notamment fonction du temps pendant lequel on peut considérer qu'une cible est animée d'un mouvement rectiligne uniforme. On peut en outre prendre en compte le temps de réaction du radar, c'est-à-dire le temps de transmission au pistage du premier plot filtré par le procédé selon l'invention.

Il est à noter ici qu'en ce qui concerne le procédé, il n'est pas nécessaire que les instants des mesures soient espacés d'un écart temporel constant, de sorte que, même si l'écart entre deux instants de mesures est variable, le procédé reste parfaitement applicable.

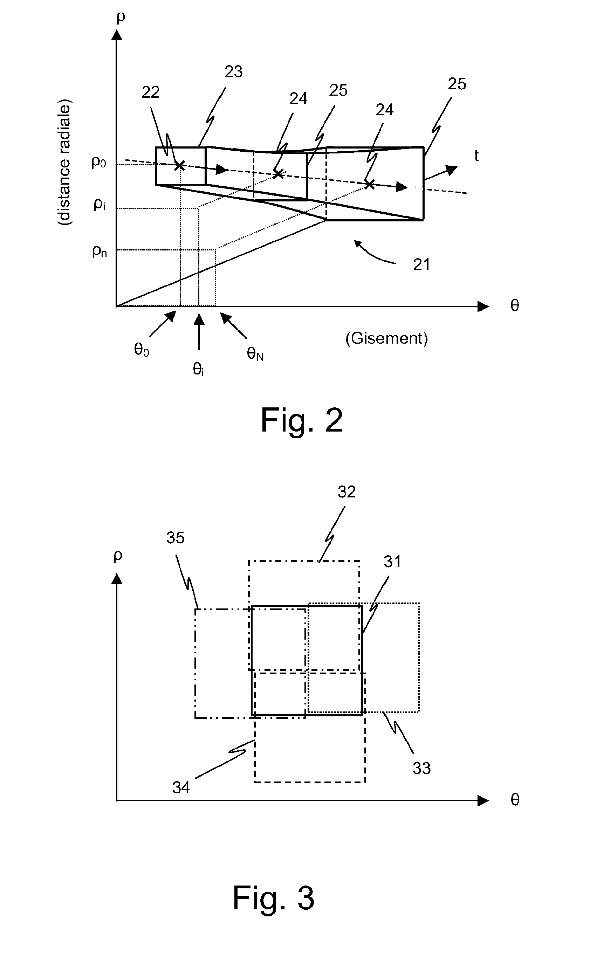

La deuxième étape 12 du procédé selon l'invention est illustrée par les figures 2 à 4. Elle consiste à tenter de regrouper les plots détectés selon des sous-ensembles caractéristiques. Chaque sous-ensemble est attaché à un modèle de cible dont la position évolue de tour à tour en fonction d'un modèle de mouvement, un mouvement rectiligne uniforme par exemple, depuis une position initiale donnée. La position initiale et le modèle de mouvement associé forment un canal d'analyse multidimensionnel à l'intérieur duquel se situent les plots pouvant potentiellement correspondre à ce modèle de cible, compte tenu de son évolution. Par suite, comme pour une position initiale donnée il existe une pluralité de mouvements possibles, l'espace surveillé par le radar est couvert par une pluralité de canaux d'analyse (21), les plots localisés dans un canal donné constituant le sous-ensemble correspondant.

Selon l'invention, comme l'illustre la figure 2 sur un exemple, chaque canal d'analyse 21 est donc initialement défini (initialisé) par la position initiale 22 du modèle de cible et par un intervalle d'incertitude 23 entourant cette position. Il est ensuite défini de tour à tour, sur l'ensemble des tours mémorisés, par la position 24 du modèle de cible au tour considéré et par l'intervalle d'incertitude 25 entourant cette position. La position du modèle de cible au tour considéré est par exemple déterminée par la valeur et la direction du vecteur vitesse associé, qui définit la trajectoire du modèle. Pour une position initiale du modèle de cible, on définit ainsi autant de canaux d'analyse que de vecteurs vitesse considérés.

En pratique, les longueurs, dans chaque dimension, d'un intervalle d'incertitude 23, 25 sont déterminées pour chaque tour d'antenne en tenant compte de la précision des mesures réalisées par le capteur, le radar ici. Le centre 22, 24 de chaque intervalle représentant la position à l'instant considéré du modèle de cible dans l'espace multidimensionnel que constitue le canal d'analyse 21 considéré.

Il est à noter que, dans le cas le plus simple, pour lequel les canaux d'analyse sont construits en partant de l'hypothèse que la mesure de la vitesse associée à un plot peut être considérée comme exacte, ces intervalles sont indépendants du temps de sorte que le canal d'analyse présente une section constante dans le temps. En dehors de ce cas, ces intervalles sont fonction du temps, de sorte qu'un canal d'analyse présente des dimensions qui varient dans le temps.

Comme on peut le constater à la lecture de ce qui précède, le nombre de canaux d'analyse 21 à prendre en considération est théoriquement infini, chaque position initiale de cible donnant naissance à une pluralité de canaux d'analyse. Cependant, compte tenu des incertitudes de mesure le nombre de canaux à prendre en considération est limité par l'intervalle d'incertitude, initial 23. Il est en pratique défini de façon à ce que, la réunion de tous les intervalles d'incertitude initiaux 23 couvre l'ensemble des positions initiales 22 possibles pour une cible (maillage initial de l'espace) et que l'ensemble de canaux d'analyse couvre la totalité de l'espace correspondant à toutes les hypothèses de mouvement d'une cible.

Par ailleurs, dans un mode de mise en oeuvre préféré du procédé selon l'invention, illustré par la figure 3, le nombre de canaux d'analyse est déterminé de façon à ce que ceux-ci puissent être agencés de telle sorte que les intervalles d'incertitude initiaux des canaux d'analyse contigus 31 à 35 présentent un recouvrement, l'intervalle d'incertitude initial 31 d'un canal d'analyse étant par exemple recouvert par ceux, 32 à 35, des quatre canaux voisins. De cette façon, on s'assure avantageusement que chacun des plots mémorisés est bien localisé dans un canal au moins. On évite ainsi les effets d'échantillonnage.

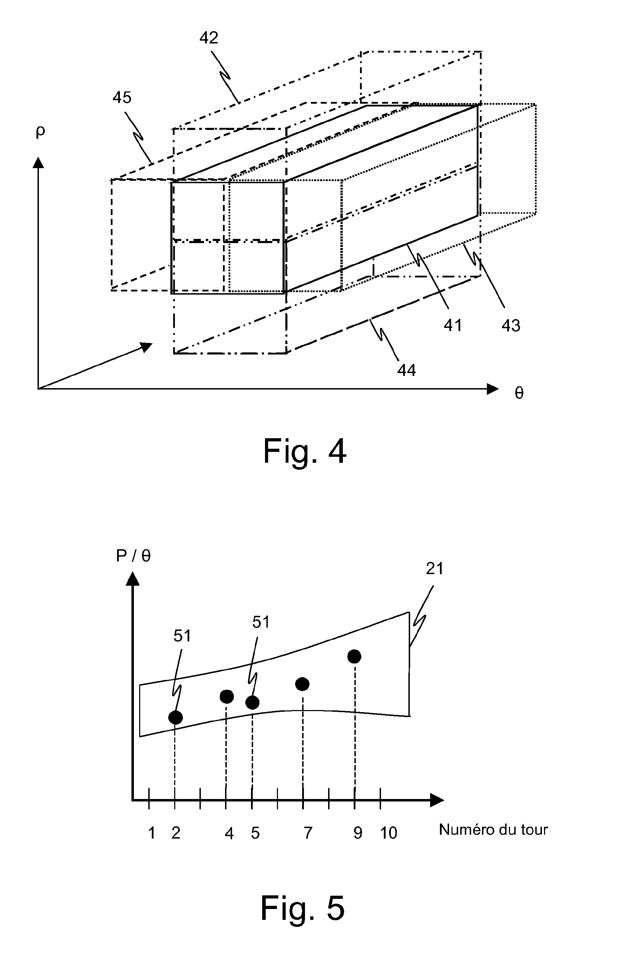

Ainsi, dans le cas simple évoqué précédemment, on obtient pour chaque vecteur vitesse considéré, un arrangement de canaux d'analyse 41 à 45 présentant un chevauchement régulier tel que celui illustré par la figure 4.

Il est à noter ici que les canaux d'analyse ayant des origines et des orientations différentes, orientations déterminées par la longueur et la direction du vecteur vitesse des modèles de cible représentés par chaque canal, un même plot peut être, pour un tour d'antenne donné, localisé dans plusieurs canaux d'analyse.

Par suite, les plots situés dans un canal d'analyse sont considérés comme constituant un sous-ensemble de plots pouvant correspondre au modèle de cible en évolution que matérialise le canal d'analyse considéré.

La troisième étape 13 du procédé selon l'invention a pour objet de déterminer parmi les sous-ensembles implicitement constitués à l'issue de l'étape précédente, lesquels de ces sous-ensembles regroupent des plots pouvant, lorsqu'ils sont considérés ensemble, correspondre à une même cible. Le principe général de fonctionnement du procédé selon l'invention consiste à déterminer cette correspondance en sélectionnant certains attributs des plots contenus dans un sous-ensemble, par exemple l'amplitude, puis à analyser la valeur de chaque attribut sur l'ensemble des plots et en analysant l'assertion (i.e. la validation par rapport à une valeur de référence) d'une combinaison donnée de ces différents attributs pour le sous-ensemble considéré. Par suite, si la combinaison est validée, le sous-ensemble est classé dans un premier groupe. Inversement si la combinaison n'est pas validée, le sous-ensemble est classé dans un second groupe. Alternativement il est possible d'envisager plusieurs assertions pour une combinaison donnée. On obtient alors une classification en une pluralité de groupes, chaque groupe renfermant les sous-ensembles pour lesquels une assertion donnée est vérifiée.

Dans le mode de mise en oeuvre particulier du procédé selon l'invention, illustré par la figure 5, l'étape 13 consiste dans un premier temps à comptabiliser pour chaque canal d'analyse 21 le nombre de plots 51 qui se situent à l'intérieur du canal à l'issue des N tours pris en compte. En pratique, on comptabilise dans chaque canal tous les plots dont la position pour un tour donné se situe dans l'espace défini par le canal, sans chercher à déterminer au préalable si un plot donné correspond ou non à une cible évoluant de telle sorte que sa position à chaque tour soit située dans le canal considéré. Par suite, un canal d'analyse peut renfermer un nombre de plots variable.

Selon ce mode de mise en oeuvre particulier, l'étape 13 du procédé consiste ensuite à réaliser le tri proprement dit des sous-ensembles de plots ainsi constitués. Le tri est ici réalisé par analyse du nombre de plots qui constitue le sous-ensemble. En effet dans l'hypothèse où les plots localisés dans le canal d'analyse considéré correspondent à une cible évoluant conformément au modèle associé à ce canal, on s'attend théoriquement à trouver un plot à chaque tour d'antenne. Dans ce cas le canal d'analyse héberge alors au moins N plots qui correspondent, selon toute vraisemblance, à une seule et même cible. En revanche, dans le cas contraire, on est conduit à penser que les plots localisés dans le canal considéré correspondent soit à des cibles différentes ayant donné lieu, pour un tour d'antenne donné à la formation d'un plot localisé dans le canal d'analyse considéré, soit à des pointes de bruit ou de fouillis. Par suite on peut considérer que les plots localisés dans ce canal d'analyse ne constituent pas un ensemble représentatif d'une cible réelle.

Dans ce mode particulier de mise en oeuvre, le critère de tri, l'attribut considéré, est donc ici la présence ou l'absence de plot. L'assertion considérée est quant à elle le fait que le nombre n de plots contenus dans le sous-ensemble considéré est supérieur ou égal à un nombre P pris comme seuil, le sous-ensemble étant considéré comme n'étant pas représentatif d'une cible si le nombre n de plots qu'il contient est inférieur à P.

On définit ainsi, dans ce mode de mise en oeuvre particulier, deux groupes de sous-ensembles, un premier groupe de sous-ensembles, considérés comme étant représentatifs de cibles, et un second groupe de sous-ensembles considérés comme étant non représentatifs.

En théorie le seuil P peut être défini comme étant égal à N. Cependant, du fait du caractère sélectif de la formation des plots à partir des échos détectés il est à envisager que pour un tour d'antenne donné, la fluctuation du niveau de signal réfléchi par une cible conduise à un niveau de signal trop faible pour donner lieu à la formation d'un plot pour le tour considéré. Par suite, le nombre de plots comptabilisés dans le canal d'analyse correspondant au mouvement de cette cible sera inférieur au nombre N pour la cible considérée. Par conséquent, un critère de tri consistant à ne considérer comme représentatif d'une cible réelle que les sous-ensembles comportant au moins N plots, N étant le nombre de tours considérés, conduirait à écarter à tort les sous-ensembles qui bien que comportant un nombre significatif de plots ne contiennent cependant pas N plots. C'est pourquoi le seuil P est ici un seuil volontairement inférieur à N. Il peut être déterminé a priori en fonction notamment de la probabilité de détection d'un écho et de constitution d'un plot par la chaîne de détection située en amont du procédé selon l'invention. Il peut également être déterminé de manière dynamique d'analyse à analyse en fonction d'une commande envoyée par la fonction de pistage elle-même en fonction de la charge qu'elle supporte. Ainsi en cas de charge faible le pistage peut commander l'utilisation d'un seuil P faible puis en présence d'une forte charge commander l'utilisation d'un seuil élevé. Le procédé selon l'invention passe ainsi d'une fonction de filtrage lâche à une fonction de filtrage sévère.

La quatrième étape 14 et la cinquième étape 15 du procédé ont pour objet de réaliser un conditionnement des plots mémorisés afin de faciliter le traitement de ces plots par la fonction de pistage.

L'étape 14 exploite le tri des sous-ensembles réalisé par l'étape précédente et effectue une qualification des plots mémorisés en prenant en compte l'ensemble des canaux d'analyse. De la sorte, si un plot donné appartient au moins à un sous-ensemble de plots considéré comme représentatif d'une cible, ce plot est catalogué comme étant directement exploitable par la fonction de pistage. Par suite un attribut lui est associé, attribut qui caractérise le groupe de sous-ensemble auquel appartient le sous-ensemble contenant ce plot. Cette étape conduit donc de manière générale à affecter chaque plot d'un attribut caractérisant la probabilité qu'il a de correspondre à une cible réelle.

Ainsi dans le mode particulier de mise en oeuvre décrit précédemment, si un plot donné appartient au moins à un sous-ensemble de plots contenant un nombre de plots n supérieur ou égal à P (premier groupe de sous-ensembles), sous-ensemble considéré comme représentatif d'une cible, il est qualifié comme étant directement exploitable par la fonction de pistage. En revanche si ce plot n'appartient à aucun sous-ensemble de plots considéré comme représentatif d'une cible, il est qualifié comme n'étant pas directement exploitable par la fonction de pistage.

L'étape 15 quant à elle consiste simplement à transmettre les plots ainsi classifiés à la fonction de pistage. Selon le mode de mise en oeuvre considéré, la transmission est effectuée suivant des modalités variables.

Ainsi dans une première forme possible de mise en oeuvre, l'étape 15 peut consister à transmettre au pistage l'ensemble des plots formés, chaque plot étant accompagné de son attribut. Le pistage se charge alors de traiter les plots de manière différentiée en fonction des attributs associés. Alternativement, l'étape 15 peut consister à seulement transmettre au pistage les plots formés dont l'attribut prend une ou plusieurs valeurs données et à éliminer les autres plots, ces derniers étant considérés comme non directement exploitables par le pistage, à un degré qui peut être variable.

De la sorte on soulage de manière indirecte la charge de calcul de la fonction pistage, en permettant par exemple au pistage, en cas de surcharge, de considérer prioritairement les plots dont l'attribut indique qu'ils sont directement exploitables.

Dans le mode particulier de mise en oeuvre décrit précédemment, illustré par la figure 5, l'étape 15 du procédé selon l'invention peut consister à transmettre simplement les plots contenus dans un sous-ensemble du premier groupe, et à éliminer les autres plots. Alternativement, l'étape 15 du procédé peut consister à transmettre chaque plot avec un attribut binaire indiquant si le plot considéré est susceptible ou non de représenter une cible.

Les étapes 11 à 15 constituent, comme cela a été dit précédemment, les étapes caractéristiques principales du procédé selon l'invention.

Dans cette version de base le procédé selon l'invention présente l'avantage de travailler à partir de plots uniquement caractérisés par leurs positions. Ainsi il n'est pas nécessaire de connaître avec précision la vitesse instantanée d'un écho pour mettre en oeuvre ce procédé. Pour une application radar la vitesse instantanée peut être obtenue en exploitant l'effet Doppler. Néanmoins dans une version plus élaborée, le procédé selon l'invention peut comporter de manière optionnelle une étape 16, intermédiaire pouvant se placer entre la deuxième étape 12 de regroupement des plots en sous-ensembles et la troisième étape 13 de regroupement des sous-ensembles en deux catégories.

Cette étape intercalaire 16, qui peut aussi être intégrée à la deuxième étape 12 du procédé selon l'invention, consiste à prendre en compte pour chaque plot certaines composantes ou toutes les composantes de la vitesse instantanée qui lui est associée et à tester la compatibilité de la vitesse instantanée ainsi déterminée à la vitesse du modèle de cible correspondant au canal d'analyse dans lequel il est situé. Par suite si les deux vitesses sont compatibles, compte tenu des biais éventuels pouvant affecter la détermination de la vitesse suivant le principe mis en oeuvre pour déterminer celle-ci (ambigüité vitesse par exemple), le plot est maintenu dans le sous-ensemble de plots correspondant au canal d'analyse considéré. Dans le cas contraire le plot est éliminé du sous-ensemble.

Cette étape complémentaire permet avantageusement de rendre globalement plus efficace et plus rapide le procédé selon l'invention. En effet lors des étapes ultérieures 13, 14 et 15 seuls sont utilisés les plots validés par l'étape 16. En outre les sous-ensembles auxquels est appliquée l'étape 13 sont de sous-ensembles dont les plots ont une vitesse instantanée conforme à celle du modèle auquel le sous-ensemble se rapporte, de sorte que comptabiliser ces plots pour déterminer si le sous-ensemble fait partie d'une ou l'autre des deux catégories définies lors de l'étape 13, s'avère plus pertinent.

Conformément à une variante particulière du mode de mise en oeuvre particulier illustré par la figure 5, l'étape 13 du procédé selon l'invention peut consister à compter l'ensemble des plots contenus dans chaque sous-ensemble et à comparer le nombre n de plots contenus dans chaque sous-ensemble non plus à une valeur unique P, mais à un ensemble de valeurs, trois valeurs P, Q et R par exemple. On définit ainsi selon que n est supérieur ou égal à P, Q ou R, une pluralité de groupes de sous-ensembles, quatre groupes par exemple. Par suite l'étape 14 du procédé consiste alors à qualifier chaque plot par un attribut reflétant l'appartenance du sous-ensemble auquel il appartient à l'un ou l'autre des groupes. La valeur de l'attribut correspond au plus grand des seuils P, Q ou R que n égalise ou dépasse. Autrement dit, la valeur de l'attribut qualifiant le plot indique le groupe rassemblant les sous-ensembles, auxquels le plot appartient, qui comportent le nombre de plots le plus élevé.

La suite de la description présente un exemple d'application du procédé selon l'invention.

L'exemple d'application présenté ici considère un cas de radar côtier simple dans lequel on suppose que les cibles (les bateaux) ont un mouvement pouvant être considéré comme rectiligne uniforme sur dix tours d'antenne (Q=10 observations) et un radar Doppler à deux dimensions (radar 2D) dont la résolution en distance radiale est $\sigma_r$ = 6m et la résolution en azimut $\sigma_{az}$ = 0,1°. La vitesse de rotation de l'antenne radar est ici fixée à un tour en deux secondes.

On suppose en outre que le traitement réalisé en amont du procédé selon l'invention comporte un filtrage doppler avec N filtres Doppler et que la vitesse ambiguë est de Va m/s.

Considérant qu'il existe plusieurs considérations possibles pour déterminer la taille et la forme des canaux d'analyse, notamment le temps de calcul, la mémoire disponible ou la précision de mesure, on prend ici simplement en compte la précision de mesure.

Par suite, on choisit de construire pour chaque vecteur vitesse considéré un ensemble de canaux d'analyses uniformément répartis sur l'espace (distance radiale, azimut, temps), cet ensemble formant un maillage de l'espace considéré. Chaque canal d'analyse est défini par des intervalles d'incertitude constants qui dépendent de la résolution du radar. Ainsi on choisit $\Delta_r = 4 \cdot k_r \cdot \sqrt{2} \cdot \sigma_r$ et $\Delta_{az} = 4 \cdot k_{az} \cdot \sqrt{2} \cdot \sigma_{az}$, $k_r$ et $k_{az}$ étant des paramètres d'incertitude. Chaque canal d'analyse recouvre en outre à moitié le canal d'analyse voisin dans la direction distance et azimut comme sur l'illustration de la figure 3. Des valeurs de $k_r$ et $k_{az}$ de 1.5 permettent d'assurer une très faible probabilité de ne pas trouver une vraie cible dans un des canaux d'analyse. On trouve donc $\Delta_r$ = 51 m et $\Delta_{az}$ = 0.85°.

Dans un tel contexte, le maillage considéré pour un tour d'antenne donné, est une simple translation du maillage du tour précédent. La translation est égale à $TV_r$ en distance et à $TV_{az}$ en azimut, T représentant la durée d'un tour d'antenne, et $V_r$ et $V_{az}$ représentant respectivement la vitesse radiale et la vitesse selon l'axe des azimuts.

Dans l'exemple présenté ici, on considère des vecteurs vitesse dont les composantes radiales sont espacées d'un pas $\Delta V_r$ égal à 1.4m/s ($\Delta V_r = \Delta_r/2 \cdot 1/(T-(Q-1))$) et dont les composantes selon l'axe des azimuts sont espacées d'un pas $\Delta V_{az}$ égal à 0.024°/s ($\Delta V_{az} = \Delta_{az}/2 \cdot 1/(T \cdot (Q-1))$). Ce paramétrage permet de satisfaire un recouvrement total afin de ne pas rejeter les cibles.

Pour chaque détection réalisée par le radar, on considère en outre que si l'on vérifie la formule suivante:

$$\left| \frac{V_{Dopp} - V_r}{V_a} - \text{round}\left( \frac{V_{Dopp} - V_r}{V_a} \right) \right| < \sqrt{\frac{1}{N^2} + \left( \frac{\Delta V_r}{V_a} \right)^2}$$

où "round" représente la fonction d'arrondi communément définie. Dans l'affirmative, les plots caractérisés par cette vitesse Doppler sont pris en compte pour chaque canal défini par une vitesse radiale égale à $V_r$. On justifie ce test de validité Doppler par le fait que $V_a/N$ représente la précision de mesure Doppler.

On peut choisir un critère binaire de décision qui compte le nombre de détections dans chaque canal d'analyse, si ce nombre dépasse 8 sur 10 tours on garde les détections du canal d'analyse. Dans ce cas on arrive à une importante réduction du nombre de plots ce qui permet au pistage d'être moins chargé en fausses alarmes. La probabilité d'avoir 8 faux plots alignés pendant 10 tours d'antenne étant négligeable.

**Revendications**

1. Procédé de filtrage cinématique temporel multidimensionnel de plots appliqué aux plots détectés pendant une durée d'analyse correspondant à une pluralité de tours d'antenne, le filtrage étant réalisé au moyen de canaux d'analyse (21), chaque canal d'analyse définissant le mouvement d'un modèle de cible depuis une position initiale (22) correspondant au début de la durée d'analyse, la position du modèle de cible (22, 24) pour un tour d'antenne donné étant affectée d'un intervalle d'incertitude (23, 25), **caractérisé en ce qu'**il comporte :

   - une première étape (11) de mémorisation des plots détectés de tour d'antenne à tour d'antenne, la mémorisation des plots détectés étant réalisée sur un nombre de tours N donné correspondant à la durée d'analyse;
   - une deuxième étape (12) de regroupement des plots mémorisés en sous-ensembles, un sous-ensemble étant constitué par les plots (51) localisés dans un même canal d'analyse (21);
   - une troisième étape (13) de classement des différents sous-ensembles en une pluralité de groupes, chaque groupe correspondant aux sous-ensembles comportant des plots (51) dont l'assertion conjointe d'une pluralité d'attributs, la valeur de chaque attribut étant intégrée sur la durée d'analyse, est vérifiée;
   - une quatrième étape (14) de qualification des plots mémorisés, le critère de qualification d'un plot donné (51) étant défini par l'appartenance du plot à l'un ou l'autre des groupes;
   - une cinquième étape (15) de transmission sélective des plots qualifiés, les conditions de transmission d'un plot (51) étant fonction de la qualification de ce plot.

2. Procédé selon la revendication 1, la troisième étape (13) consiste à classer les différents sous-ensembles en plusieurs groupes, chaque groupe correspondant aux sous-ensembles comportant un nombre n de plots (51) inférieur à un nombre P donné, différent d'un groupe à l'autre; la quatrième étape (14) de qualification des plots mémorisés, consistant à qualifier chaque plot (51) par un attribut caractérisant l'appartenance du plot aux sous-ensembles des différents groupes;

3. Procédé selon la revendication 1, la troisième étape (13) consiste à classer les différents sous-ensembles en deux groupes, un premier groupe correspondant aux sous-ensembles comportant un nombre n de plots (51) inférieur à un nombre P donné et un second groupe correspondant aux sous-ensembles comportant un nombre de plots (51) supérieur ou égal à P; la quatrième étape (14) de qualification des plots mémorisés, consistant à qualifier chaque plot (51) par un attribut binaire dont la valeur caractérise son appartenance à un sous-ensemble de l'un ou l'autre groupe.

4. Procédé selon l'une des revendications 1 à 3, **caractérisé en ce que** chaque canal d'analyse (21) utilisé au cours de la deuxième étape (12), est défini comme une zone (41) de l'espace multidimensionnel (position, vitesse et temps), **caractérisé par** une position initiale et un vecteur vitesse initial, et délimité à chaque instant de mesure par un intervalle (31) d'incertitude en position dont les dimensions sont fonction de la précision, selon chacun des axes de mesure, des mesures effectuées.

5. Procédé selon la revendication 4, **caractérisé en ce que** les canaux d'analyse (21) sont déterminés en choisissant un ensemble de vecteurs vitesse et en considérant pour chaque vecteur vitesse un maillage initial de l'espace défini par une pluralité d'intervalles d'incertitude (23); chaque intervalle étant centré sur un point (22) donné de cet espace, de façon à couvrir la totalité de cet espace.

6. Procédé selon la revendication 5, **caractérisé en ce que** les positions sur lesquelles sont centrés les différents intervalles d'incertitude sont définies de façon à ce que chaque intervalle (31) soit recouvert sur une moitié de sa surface par chacun des intervalles voisins (32-35).

7. Procédé selon l'une des revendications 5 ou 6, **caractérisé en ce que** les vecteurs vitesse choisis ont une amplitude et une direction constante d'un instant de mesure à l'autre, chaque canal d'analyse (41 - 45) ainsi défini caractérisant le mouvement rectiligne uniforme d'un modèle de cible depuis une position initiale (22).

8. Procédé selon l'une des revendications 5 à 7 **caractérisé en ce que**, la vitesse associée à chaque plot étant considérée comme exacte, l'intervalle d'incertitude (23, 25) qui délimite un canal pour un instant de mesure donné, a des dimensions constantes.

9. Procédé selon la revendication 4, **caractérisé en ce que** l'espace multidimensionnel (position, vitesse, temps) est défini par un axe des temps et un repère de coordonnées polaires ayant le radar pour origine, la position initiale étant définie par une distance radiale une position en gisement et une position en site et le vecteur vitesse par une composante radiale, une composante en gisement et une composante en site.

10. Procédé selon la revendication 4, **caractérisé en ce que** l'espace multidimensionnel (position, vitesse, temps) est défini par un axe des temps et un repère de coordonnées polaires ayant le radar pour origine, la position initiale étant définie par une distance radiale et une position en gisement et le vecteur vitesse par une composante radiale et une composante en gisement.

11. Procédé selon la revendication 4, **caractérisé en ce que** l'espace multidimensionnel (position, vitesse, temps) est défini par un axe des temps et un repère de coordonnées cartésiennes à trois dimensions ayant le radar pour origine, la position initiale et les composantes du vecteur vitesse, sont exprimées dans ce repère.

12. Procédé selon la revendication 4, **caractérisé en ce que** l'espace multidimensionnel (position, vitesse, temps) est défini par un axe des temps et un repère de coordonnées cartésiennes à deux dimensions ayant le radar pour origine, la position initiale et les composantes du vecteur vitesse, sont exprimées dans ce repère.

13. Procédé selon l'une quelconque des revendications 2 à 12 **caractérisé en ce que** la quatrième étape (14) de qualification des plots consiste à affecter un attribut à chaque plot (51) mémorisé, attribut dont la valeur indique le groupe rassemblant les sous-ensembles, auxquels le plot appartient, qui comportent le nombre de plots le plus élevé

14. Procédé selon l'une quelconque des revendications 3 à 12, **caractérisé en ce que** la quatrième étape (14) de qualification des plots consiste à affecter un attribut binaire à chaque plot (51) mémorisé, attribut dont une valeur indique que le plot appartient à au moins un sous-ensemble classé dans le second groupe et dont l'autre valeur indique n'appartient à aucun sous-ensemble classé dans ce second groupe.

15. Procédé selon la revendication 14, **caractérisé en ce que** la cinquième étape (15) de transmission des plots au pistage transmet seulement les plots dont les attributs binaires indiquent que ces plots appartiennent à au moins un sous-ensemble classé dans le second groupe; les autres plots n'étant pas transmis.

16. Procédé selon la revendication 14, **caractérisé en ce que** la cinquième étape (15) de transmission des plots au pistage transmet l'ensemble des plots mémorisés chaque plot étant transmis avec son attribut binaire.

17. Procédé selon l'une quelconque des revendications précédentes, **caractérisé en ce qu'**au cours de la deuxième étape (12) on prend en compte la vitesse instantanée de chaque plot, un plot (51) n'étant classé dans un canal d'analyse (21) à un instant de mesure donné $t_i$ que si sa vitesse instantanée est comparable à celle définie pour le modèle de cible qui est matérialisé par le canal (21) considéré.

Fig. 1

Fig. 2

Fig. 3

Fig. 4

Fig. 5

Europäisches
Patentamt

European
Patent Office

Office européen
des brevets

**RAPPORT DE RECHERCHE EUROPEENNE**

Numéro de la demande

EP 09 17 6504

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | GB 2 397 957 A (QINETIQ LTD [GB]) 4 août 2004 (2004-08-04) * abrégé * * page 2, ligne 16 - ligne 32 * * page 9, ligne 5 - ligne 6 * ----- | 1-17 | INV. G01S13/538 G01S7/41 G01S13/72 |
| A | GB 1 305 181 A (HUGHES AIRCRAFT CO [US]) 31 janvier 1973 (1973-01-31) * figure 2 * * page 1, colonne 2, ligne 90 - page 2, colonne 1, ligne 46 * ----- | 1 | |
| A | EP 0 778 470 A (THOMSON CSF [FR] THALES SA [FR]) 11 juin 1997 (1997-06-11) * abrégé * ----- | 1 | |
| A | GB 2 054 309 A (SECR DEFENCE) 11 février 1981 (1981-02-11) * abrégé * ----- | 1 | |

DOMAINES TECHNIQUES RECHERCHES (IPC)

G01S

Le présent rapport a été établi pour toutes les revendications

| Lieu de la recherche | Date d'achèvement de la recherche | Examinateur |
|---|---|---|
| La Haye | 22 janvier 2010 | Alberga, Vito |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**EP 2 196 821 A1**

**ANNEXE AU RAPPORT DE RECHERCHE EUROPEENNE
RELATIF A LA DEMANDE DE BREVET EUROPEEN NO.**

EP 09 17 6504

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-01-2010

| Document brevet cité au rapport de recherche | | Date de publication | Membre(s) de la famille de brevet(s) | | Date de publication |
|---|---|---|---|---|---|
| GB 2397957 | A | 04-08-2004 | AT | 409873 T | 15-10-2008 |
| | | | EP | 1588188 A1 | 26-10-2005 |
| | | | WO | 2004068163 A1 | 12-08-2004 |
| | | | JP | 2006516728 T | 06-07-2006 |
| | | | US | 2006132354 A1 | 22-06-2006 |
| GB 1305181 | A | 31-01-1973 | DE | 1791093 A1 | 03-08-1972 |
| | | | FR | 1604829 A | 17-04-1972 |
| EP 0778470 | A | 11-06-1997 | DE | 69621314 D1 | 27-06-2002 |
| | | | DE | 69621314 T2 | 07-11-2002 |
| | | | FR | 2741956 A1 | 06-06-1997 |
| GB 2054309 | A | 11-02-1981 | AUCUN | | |

EPO FORM P0460

Pour tout renseignement concernant cette annexe : voir Journal Officiel de l'Office européen des brevets, No.12/82